# EUROPÄISCHE PATENTSCHRIFT

(11) **EP 3 622 543 B1**
(45) Veröffentlichungstag und Bekanntmachung des Hinweises auf die Patenterteilung: **26.05.2021**
(21) Anmeldenummer: 17734707.7
(22) Anmeldetag: 28.06.2017
(51) Int. Cl.: H01F 6/06

(54) **SPULENEINRICHTUNG UND WICKLUNGSTRÄGER FÜR NIEDERPOLIGEN ROTOR**
COIL DEVICE AND WINDING SUPPORT FOR LOW-POLE ROTOR
DISPOSITIF BOBINE ET SUPPORT D'ENROULEMENT POUR ROTOR À FAIBLE NOMBRE DE PÔLES

(43) Veröffentlichungstag der Anmeldung: 18.03.2020
(73) Patentinhaber: Siemens Energy Global GmbH & Co. KG, 81739 München (DE)
(72) Erfinder: ARNDT, Tabea, 91056 Erlangen (DE); OOMEN, Marijn Pieter, 91056 Erlangen (DE)
(86) Internationale Anmeldenummer: PCT/EP2017/065955
(87) Internationale Veröffentlichungsnummer: WO 2019/001696

(56) Entgegenhaltungen:
- WO-A1-2006/111527
- WO-A1-2017/005619
- DE-A1-102010 040 272
- US-A1- 2004 122 638

## Beschreibung

Die vorliegende Erfindung betrifft eine supraleitende Spuleneinrichtung mit wenigstens einer Spulenwicklung, umfassend wenigstens eine Windung aus einem supraleitenden Bandleiter, wobei der Bandleiter eine erste und eine zweite Hauptfläche aufweist. Weiterhin betrifft die Erfindung einen Rotor für eine elektrische Maschine mit einer solchen Spuleneinrichtung sowie einen Wicklungsträger für eine derartige Spulenwicklung und ein Herstellungsverfahren dafür.

Supraleitende Bandleiter, insbesondere solche mit flächigen, dünnen supraleitenden Beschichtungen auf metallischen Substratbändern, zeigen vielversprechende Eigenschaften für die Herstellung von Spulenwicklungen. Es kann sich hierbei insbesondere um Rotorwicklungen oder Statorwicklungen von elektrischen Maschinen, aber auch um Magnetspulen oder andere Arten von Spulenwicklungen handeln. Allgemein vorteilhaft bei der Verwendung von solchen supraleitenden Bandleitern ist, dass bei einer Temperatur unterhalb der Sprungtemperatur des Supraleiters ein Strom nahezu verlustfrei fließen kann.

Problematisch bei der Herstellung von Spulenwicklungen ist, dass solche supraleitenden Bandleiter allgemein sehr empfindlich gegenüber mechanischen Belastungen sind. So können mechanische Beanspruchungen bei der Herstellung einer Wicklung leicht zu einer Beschädigung der supraleitenden Schicht, insbesondere zu einer Delamination von Teilen der Schicht und/oder zu einer Verschlechterung der supraleitenden Eigenschaften führen. Besonders empfindlich sind die bekannten supraleitenden Bandleiter bezüglich einer Biegung, die innerhalb der Bandebene stattfindet - also bezüglich einer Biegung um eine Achse senkrecht zur Bandebene. Aus geometrischen Gründen ist hier die lokale Dehnung in einigen Bandbereichen besonders hoch. Grundsätzlich sollten jedoch auch andere starke Biegungen des Bandleiters beim Herstellen einer solchen Wicklung so weit wie möglich minimiert werden, um Schädigungen zu vermeiden.

Aus diesen Gründen werden nach dem Stand der Technik Wicklungen aus supraleitenden Bandleitern meist in Form von Flachspulen hergestellt. Bei einer Flachspule handelt es sich um eine Spule, die um eine feste Wicklungsachse innerhalb einer gleichbleibenden planaren Wicklungsebene gewickelt wird. Bei der Herstellung einer solchen Wicklung wird die supraleitende Schicht des Bandleiters vergleichsweise wenig mechanisch belastet, da nur eine Biegung um die Wicklungsachse stattfindet, die parallel zur Querrichtung des Bandleiters liegt. Vorteilhaft wird bei einer solchen planaren Wicklung sowohl eine Torsion des Bandleiters als auch eine Biegung innerhalb der Bandebene vermieden. So hat sich die Herstellung von Flachspulen als die gängigste und schonendste Art der Herstellung von supraleitenden Wicklungen etabliert.

Die Verwendung von supraleitenden Flachspulen bringt jedoch für einige Arten von Anwendungen Nachteile mit sich. So wäre es für manche Anwendungen vorteilhaft, wenn auch Spulen mit einer dreidimensionalen Geometrie zur Verfügung stünden. Unter einer dreidimensionalen Geometrie soll im vorliegenden Zusammenhang verstanden werden, dass die Spulenwicklung so ausgeformt ist, dass ihre Wicklungsebene nicht konstant ist, dass sie also die planare Spulenform verlässt. Dabei kann es sich beispielsweise um eine Sattelspule handeln.

Beispielsweise ist die Verwendung einer dreidimensional ausgeformten Spulenwicklung vorteilhaft für die Anwendung als Rotorwicklung in einem Rotor einer elektrischen Maschine mit einer geringen Polzahl. Bei einer solchen niedrigen Polzahl, insbesondere bei einer Polzahl p=2, ist es vorteilhaft, die elektrisch wirksamen Längsschenkel der Spulenwicklung in Richtung der Rotorachse und möglichst nah an der sogenannten Äquatorebene, die diese Achse enthält, anzuordnen. Dies ist jedoch bei einer Flachspulen-Wicklung oft nicht möglich, da das Zentrum des Rotors im Bereich der Rotorachse freigehalten werden muss und ohne eine Biegung der Wicklung auch die Querschenkel dann sehr nahe bei der Achse verlaufen. Ein Freihalten der Achse kann beispielsweise für die Anordnung einer Rotorwelle zur Drehmomentübertragung, für die Einspeisung von Kühlmittel, aus rotordynamisch-mechanischen Gründen und/oder für die Anordnung elektrischer Zuleitungen im Bereich der Achse nötig sein. Bei der Herstellung von Spuleneinrichtungen für einen solchen niederpoligen Rotor mit supraleitenden Flachspulen müssen daher oft Kompromisse geschlossen werden. So werden beispielsweise solche Flachspulen oft weiter weg von der Äquatorebene angeordnet als dies aus elektrischen beziehungsweise elektrodynamischen Gründen wünschenswert wäre.

Es besteht also grundsätzlich ein Bedarf, auch mit supraleitenden Bandleitern dreidimensional ausgeformte Spulenwicklungen zu erzeugen. Bisher konnte dies beispielsweise durch nachträgliches Biegen einer flach gewickelten ovalen Wicklung in die Form einer Zylinderoberfläche erreicht werden, wie beispielsweise in M.P. Oomen et al, "Transposed-cable coil & saddle coils of HTS for rotating machines: test results at 30K", IEEE Trans. Appl. Superconductivity 19-3, p. 1633-1638 (2009) beschrieben. Eine andere bekannte Möglichkeit besteht darin, wie in der DE 10 2008 035 655 A1 beschrieben, den Bandleiter bereits dreidimensional zu wickeln. Zur Vermeidung starker Biegungen des Bandleiters sind in beiden Fällen jedoch platzaufwändige Wickelköpfe nötig, um die Längsschenkel der Wicklung in ihren axialen Endbereichen zu verbinden und gleichzeitig niedrige Biegeradien des Bandleiters zu vermeiden. Durch diese Wickelköpfe wird ein hoher Platzbedarf verursacht, und ein mit solchen Wicklungen hergestellter Rotor ist daher vergleichsweise lang, was wiederum zu einem hohen Gewicht und einem höheren Materialverbrauch beiträgt.

Aufgabe der vorliegenden Erfindung ist es daher, eine Spuleneinrichtung anzugeben, welche die genannten Nachteile vermeidet. Insbesondere soll eine Spuleneinrichtung mit einer Spulenwicklung aus einem supraleitenden Bandleiter angegeben werden, welche dreidimensional ausgeformt ist und trotzdem einen vergleichsweise niedrigen Platzbedarf für die Wickelköpfe aufweist, ohne dass der Bandleiter durch die mechanische Belastung beim Wickeln geschädigt wird. Weitere Aufgaben bestehen darin, einen Rotor mit einer derartigen Spuleneinrichtung anzugeben sowie ferner einen Wicklungsträger für eine Spulenwicklung dieser Spuleneinrichtung anzugeben und ein Herstellungsverfahren für die Herstellung der Spulenwicklung anzugeben.

Diese Aufgaben werden durch die in Anspruch 1 angegebene Spuleneinrichtung, den in Anspruch 9 angegebenen Rotor, den in Anspruch 11 angegebenen Wicklungsträger und durch das in Anspruch 13 angegebene Herstellungsverfahren gelöst.

Unter dem genannten "deutlichen Richtungswechsel" soll verstanden werden, dass der Bandleiter hier nicht nur die Orientierung seiner Hauptflächen wechselt, sondern gleichzeitig auch abbiegt. Ein solches Abbiegen kann beispielsweise mit einem Richtungswechsel der Längsrichtung zwischen 45° und 135° verbunden sein. Besonders vorteilhaft kann der Richtungswechsel etwa 90° betragen, also beispielsweise etwa zwischen 70° und 110° oder zwischen 80° und 100° liegen. Ein derart starker Richtungswechsel im Bereich von etwa 90° bewirkt vorteilhaft, dass die Richtung des Bandleiters relativ abrupt zwischen der Richtung von Längsschenkeln und Querschenkeln einer Wicklung wechseln kann und somit ein vergleichsweise niedriger axialer Platzbedarf für die Wicklungsköpfe benötigt wird.

Unter dem genannten Wechsel der Orientierung der Hauptflächen soll verstanden werden, dass der Bandleiter gleichzeitig mit dem Abbiegen gewendet wird. Die in Anspruch 1 genannte zentrale Achse der Spuleneinrichtung kann hierbei beispielsweise eine Rotorachse sein oder eine andere zentrale Symmetrieachse. Im genannten Wendebereich wechselt also die Ausrichtung der beiden Hauptflächen des Bandleiters bezüglich eines solchen Zentrums. Beispielsweise kann der Bandleiter im Wendebereich nahezu vollständig gewendet werden, sodass die Ebenenlage einer gegebenen Hauptfläche beim Durchlaufen des Wendebereichs um etwa eine halbe Drehung gedreht wird. Der Drehwinkel der ebenen Lage beim Durchlaufen des Wendebereich Scan beispielsweise zwischen 160° und 200°, insbesondere zwischen 170° und 190°, liegen.

Durch die beschriebene Art des gleichzeitigen Richtungswechsels und der starken Torsion des Bandleiters (also dem Wenden) wird erreicht, dass ein Übergang zwischen Längsschenkel und Querschenkel einer Wicklung mit einem relativ geringen Platzbedarf ermöglicht wird. Die beschriebene Art der Wende wird im Folgenden auch als "Eckwende" bezeichnet. Wenn eine solche "Eckwende" auf geringem Raum durchgeführt wird, so folgt daraus, dass der Bandleiter entsprechend mit einem niedrigen Biegeradius gebogen werden muss. Dies steht zunächst im Widerspruch mit der allgemeinen Erkenntnis, dass niedrige Biegeradien bei supraleitenden Bandleitern nach Möglichkeit zu vermeiden sind. Es hat sich jedoch im Zusammenhang mit der vorliegenden Erfindung überraschenderweise gezeigt, dass bei der beschriebenen Wende in Kombination mit dem Richtungswechsel von den vorliegenden supraleitenden Bandleitern vergleichsweise niedrige Biegeradien ohne Schaden toleriert werden können. Der Grund hierfür ist, dass durch die beim Richtungswechsel gleichzeitig eingeführte Wende ein Biegen des Bandleiters innerhalb der Bandebene weitgehend vermieden wird und stattdessen der Richtungswechsel durch eine Torsion vermittelt wird. Eine solche Torsion kann auch bei relativ kleinräumiger Biegung von den bekannten Bandleitern deutlich besser toleriert werden als eine entsprechende Biegung innerhalb der Ebene, welche auf vergleichbarem Raum den gleichen Richtungswechsel herbeiführen würde. So beruht die Erfindung auf der überraschenden Erkenntnis, dass ein starker kleinräumiger "Knick" - also eine eng begrenzte Eckwende - des Bandleiters bei gleichzeitiger Vermeidung der Biegung innerhalb der Bandleiterebene von bekannten Bandleitern ohne Schädigung des Supraleiters toleriert werden kann. Insbesondere kann ein Bandleiter mit einer dünnen supraleitenden Schicht, welche auf einem Substratband angeordnet ist, einen solchen Knick bei geeigneter Wahl des Biegeradius ohne Delamination oder sonstige Schädigung der supraleitenden Schicht überstehen.

Ein wesentlicher Vorteil der beschriebenen Spuleneinrichtung liegt darin, dass durch die beschriebene "Eckwende" der Übergang zwischen Längsschenkel und Querschenkeln einer Spulenwicklung auf räumlich relativ begrenztem Raum erfolgen kann und somit ein sehr geringer axialer Platzbedarf für die Wicklungsköpfe entsteht. Unter den Wicklungsköpfen soll hier allgemein im Zusammenhang mit der vorliegenden Erfindung die Kombination aus den Querschenkeln und den Übergangsbereichen zwischen Quer- und Längsschenkeln verstanden werden. Insgesamt wird durch die Platzierung solcher "Eckwenden" in der Spulenwicklung die Ausgestaltung von dreidimensional ausgeformten Wicklungen (im Gegensatz zu Flachspulen) ermöglicht. Dies ermöglicht vor allem Ausgestaltungen, die im Zusammenhang mit Spuleneinrichtungen für niederpolige Rotoren in elektrischen Maschinen vorteilhaft sind. So kann sich die Spulenwicklung beispielsweise zumindest in Teilen einer Zylinderoberfläche anpassen. Eine solche Formgebung hat den Vorteil, dass bei einem niederpoligen Rotor die Längsschenkel der Wicklung nahe an der Äquatorebene geführt werden können und trotzdem die Querschenkel einen vergleichsweise größeren Abstand zu dieser Ebene aufweisen können. Hierzu können die Querschenkel insbesondere derart gebogen sein, dass die Wicklung im Bereich der Querschenkel einen größeren Abstand von der zentralen Achse gewinnt.

Die Vorteile der beschriebenen Spuleneinrichtung kommen vor allem im Zusammenhang mit einem supraleitenden Bandleiter zum Tragen, da hier eine dreidimensionale Formgebung unter Vermeidung einer Biegung des Bandleiters innerhalb der Bandebene erreicht wird. Ganz allgemein ist es jedoch auch möglich, einen entsprechenden normalleitenden Bandleiter - insbesondere bei hoher Empfindlichkeit gegenüber Biegung innerhalb der Ebene - auf die beschriebene Art zu wickeln und hierbei die entsprechenden Vorteile zu erreichen. Z.B. wird für normalleitende Bandleiter eine Reduktion der Korngrößen aufgrund der Verformung und eine damit einhergehende Erhöhung des normalleitenden elektrischen Widerstandes vermieden.

Der erfindungsgemäße Rotor ist als Rotor für eine elektrische Maschine ausgebildet und weist wenigstens eine erfindungsgemäße Spuleneinrichtung auf. Die Vorteile eines solchen Rotors ergeben sich analog zu den oben beschriebenen Vorteilen der erfindungsgemäßen Spuleneinrichtung.

Der erfindungsgemäße Wicklungsträger ist als Wicklungsträger für eine dreidimensional ausgeformte Spulenwicklung ausgebildet. Der Wicklungsträger weist eine ringförmig umlaufende Auflagefläche zur flächigen Auflage eines supraleitenden Bandleiters auf. Hierbei weist die Auflagefläche wenigstens einen Wendebereich auf, in dem die Auflagefläche so gebogen ist, dass sie in diesem Wendebereich einen deutlichen Richtungswechsel in der Längsrichtung eines aufliegenden Bandleiters bewirkt und dass gleichzeitig die Orientierung der beiden Hauptflächen eines aufliegenden Bandleiters bezüglich einer zentralen Achse der Spuleneinrichtung wechselt.

Mit anderen Worten ist der erfindungsgemäße Wicklungsträger zur Ausbildung einer "Eckwende" in einer darauf aufzuwickelnden Wicklung ausgestaltet. Die hieraus abzuleitenden Vorteile ergeben sich analog zu den oben beschriebenen Vorteilen der erfindungsgemäßen Spuleneinrichtung.

Das erfindungsgemäße Verfahren dient zur Herstellung einer supraleitenden Spulenwicklung. Hierbei wird wenigstens eine Windung aus einem supraleitenden Bandleiter so auf einen erfindungsgemäßen Wicklungsträger aufgewickelt, dass eine erste Hauptfläche des Bandleiters umlaufend flächig auf der Auflagefläche des Wicklungsträgers zu liegen kommt. Auch hier ergeben sich die Vorteile analog zu den oben beschriebenen Vorteilen der erfindungsgemäßen Spuleneinrichtung.

Vorteilhafte Ausgestaltungen und Weiterbildungen der Erfindung gehen aus den von den Ansprüchen 1, 9 und 11 abhängigen Ansprüchen sowie der folgenden Beschreibung hervor. Dabei können die beschriebenen Ausgestaltungen der Spuleneinrichtung, des Rotors, des Wicklungsträgers und des Herstellungsverfahrens vorteilhaft miteinander kombiniert werden.

So kann der minimale Biegeradius des Bandleiters innerhalb des Wendebereichs vorteilhaft zwischen 1 cm und 25 cm, insbesondere zwischen 3 cm und 10 cm, liegen. Unter dem genannten minimalen Biegeradius soll dabei der kleinste Biegeradius verstanden werden, welcher jeweils über den Verlauf des Bandleiters im gesamten Wendebereich auftritt. Besonders vorteilhaft ist dabei der Biegeradius über den gesamten Wendebereich relativ einheitlich. So kann beispielsweise der Wendebereich derart ausgestaltet sein, dass der Bandleiter hier einer Krümmungsfläche folgt, welche einen Teil einer Kreiszylinder-Oberfläche ausbildet.

Ein Biegeradius im genannten Bereich hat den Vorteil, dass bei der "Eckwende" in einem kleinräumigen Abschnitt eine starke Biegung erreicht wird, dass aber gleichzeitig durch die genannte Untergrenze ein zu starkes Knicken und damit eine Beschädigung des Bandleiters vermieden wird. Die Tatsache, dass ein supraleitender Bandleiter in dem genannten Bereich der Biegeradien gebogen werden kann ohne Schaden zu nehmen ist überraschend und rührt daher, dass der Bandleiter bei der beschriebenen Eckwende nicht - beziehungsweise höchstens minimal - innerhalb der Bandebene gebogen wird.

Wird die Windung nicht aus einem einzelnen Bandleiter, sondern aus einem Stapel von übereinanderliegenden Bandleitern gebildet, so können diese Bandleiter auch insgesamt stapelweise über die beschriebene "Eckwende" gewendet werden. Bei einer solchen Ausführungsform werden auch die beschriebenen Vorteile der Erfindung erzielt, wobei gleichzeitig ein höherer Strom in der Wicklung erreicht werden kann.

Die wenigstens eine Spulenwicklung kann bevorzugt sattelförmig ausgebildet sein. So kann sie insbesondere in Teilbereichen an die Konturen eines Hohlzylindersegments angepasst sein. Es können ein oder mehrere Teilbereiche der Wicklung aus einer flachen Ebene heraus gekrümmt sein. Dies können insbesondere Querschenkel einer solchen Wicklung sein. Alternativ oder zusätzlich können die Längsschenkel aus der mittleren Spulenebene heraus gekippt sein.

Vorteilhaft weist die Spuleneinrichtung wenigstens einen Wicklungsträger auf, auf dem die wenigstens eine Spulenwicklung so gehalten ist, dass sie zumindest in dem wenigstens einen Wendebereich auf dem Wicklungsträger aufliegt. Hierbei soll die bezüglich des Wicklungsträgers untenliegende Wicklung des Bandleiters vorteilhaft flächig auf dem Wicklungsträger aufliegen. Besonders bevorzugt liegt diese untenliegende Wicklung über ihren gesamten Umfang auf den Wicklungsträger auf. Der Wicklungsträger kann dabei allgemein bevorzugt wie in Anspruch 13 beschrieben ausgestaltet sein. So kann die beschriebene Formgebung der Spulenwicklung besonders effektiv durch den Wicklungsträger unterstützt werden.

Der Bandleiter kann allgemein ein Substratband mit einer darauf angeordneten supraleitenden Schicht sein. Besonders vorteilhaft kann es sich bei dieser Schicht um eine hochtemperatursupraleitende Schicht handeln. Hochtemperatursupraleiter (HTS) sind supraleitende Materialien mit einer Sprungtemperatur oberhalb von 25 K und bei einigen Materialklassen, beispielsweise den Cuprat-Supraleitern, oberhalb von 77 K, bei denen die Betriebstemperatur durch Kühlung mit anderen kryogenen Materialien als flüssigem Helium erreicht werden kann. HTS-Materialien sind auch deshalb besonders attraktiv, da diese Materialien abhängig von der Wahl der Betriebstemperatur sehr hohe kritische Stromdichten aufweisen können.

Die supraleitende Schicht kann beispielsweise HTS-Materialien der zweiten Generation, also insbesondere Verbindungen des Typs REBa₂Cu₃Oₓ (kurz REBCO) enthalten, wobei RE für ein Element der seltenen Erden oder eine Mischung solcher Elemente steht. REBCO-Supraleiter können aufgrund ihrer hohen Sprungtemperaturen auch mit flüssigem Stickstoff gekühlt werden und weisen vor allem bei tieferen Temperaturen als 77 K eine besonders hohe Stromtragfähigkeit auf.

Alternativ kann das hochtemperatursupraleitende Material Magnesiumdiborid umfassen. Besonders vorteilhaft kann die supraleitende Schicht als Hauptbestandteil Magnesiumdiborid aufweisen oder sogar im Wesentlichen aus Magnesiumdiborid bestehen. Magnesiumdiborid weist eine Sprungtemperatur von etwa 39 K auf und gilt somit als Hochtemperatur-Supraleiter, allerdings ist die Sprungtemperatur im Vergleich zu anderen HTS-Materialien eher niedrig. Die Vorteile dieses Materials im Vergleich zu oxidkeramischen Hochtemperatur-Supraleitern liegen bei seiner leichten und somit kostengünstigen Herstellbarkeit. Auf Magnesiumdiborid basierende Leiter können besonders einfach und günstig durch Aerosoldeposition oder durch das sogenannte Powder-in-Tube-Verfahren hergestellt werden.

Das Substrat des Bandleiters kann vorteilhaft Stahl oder eine nickelhaltige Legierung wie beispielsweise Hastelloy aufweisen. Es kann sich allgemein unabhängig von der genauen Materialwahl um ein elektrisch normalleitendes Substrat handeln, welches insbesondere mit der supraleitenden Schicht elektrisch leitend in Verbindung stehen kann.

Der supraleitende Bandleiter weist typischerweise eine vergleichsweise dünne supraleitende Schicht mit einer Schichtdicke im Mikrometerbereich auf, welche auf dem Substrat abgeschieden ist. Dieses Trägersubstrat bestimmt wesentlich die mechanischen Eigenschaften des Bandleiters, da es einen großen Teil des Volumens des Bandleiters ausmacht. Zwischen Trägersubstrat und supraleitender Schicht können hierbei optional weitere Zwischenschichten vorgesehen sein, beispielsweise eine oder mehrere oxidische Pufferschichten, welche das Wachstum der Supraleiterschicht positiv beeinflussen können. Zusätzlich kann der Aufbau aus Trägersubstrat und supraleitender Schicht von einer normalleitenden Schicht abgedeckt oder umhüllt sein. Eine solche Schicht wird in der Fachwelt oft auch als Shuntschicht bezeichnet und kann der elektrischen und/oder thermischen Stabilisierung dienen.

Der Wendebereich ist besonders bevorzugt ein räumlich stark begrenzter Teilbereich des gesamten Umfangs der Spulenwicklung. Beispielsweise kann die Summe aller innerhalb der Spulenwicklung vorliegenden Wendebereiche einen Umfangsanteil von maximal 10 % des Umfangs der Gesamtwicklung ausmachen. Besonders bevorzugt liegt dieser Umfangsanteil sogar nur bei maximal 5 %, insbesondere sogar nur bei maximal 2,5 %. Bezogen auf die einzelnen Längsschenkel und Querschenkel können diese Umfangsverhältnisse wie folgt aussehen: Die axiale Länge der jeweiligen Längsschenkel kann bevorzugt wenigstens zehnmal so groß sein wie die axiale Länge eines einzelnen Wendebereichs. Dies ermöglicht einen vorteilhaft hohen Anteil des elektrisch besonders wirksamen Bereichs der Wicklung. Weiterhin kann die Ausdehnung der jeweiligen Querschenkel in azimutaler Richtung bevorzugt wenigstens viermal so groß sein wie die entsprechende Ausdehnung eines einzelnen Wendebereichs. Mit diesen vergleichsweise engen Abmessungen der Wendebereiche ist eine besonders kompakte Ausgestaltung der Wicklungsköpfe möglich.

Bei einem Wendebereich kann es sich bevorzugt um einen sogenannten Eckbereich handeln, bei dem ein Längsschenkel der Spulenwicklung in einen Querschenkel der Spulenwicklung übergeht. Unter einem Längsschenkel soll hier allgemein ein Wicklungsabschnitt verstanden werden, welcher sich im Wesentlichen parallel zu einer zentralen Achse der Spuleneinrichtung erstreckt. Demgegenüber soll unter einem Querschenkel allgemein ein Wicklungsabschnitt verstanden werden, welcher sich im Wesentlichen quer zu einer solchen Achse erstreckt.

Die wenigstens eine Spulenwicklung weist allgemein genau zwei Längsschenkel auf, die sich entlang einer zentralen Achse der Spuleneinrichtung erstrecken. Weiterhin weist die Spulenwicklung genau zwei axial endständige Querschenkel auf, die die beiden Längsschenkel in den beiden axialen Endbereichen miteinander verbinden. Erfindungsgemäss weist dann die Spulenwicklung insgesamt vier Wendebereiche auf, über welche die Längsschenkel und die Querschenkel untereinander verbunden sind. Besonders vorteilhaft ist in allen vier derartigen Wendebereichen der Bandleiter, der die Wicklung ausbildet, jeweils über eine Eckwende auf die beschriebene Weise gebogen.

Bei einer derartigen Spulenwicklung mit zwei Längsschenkeln und zwei Querschenkeln können die beiden Längsschenkel einen untereinander gleichen radialen Abstand r1 von der zentralen Achse aufweisen. Weiterhin können die beiden Querschenkel einen untereinander gleichen Abstand r2 von der zentralen Achse aufweisen. Dabei können sich diese beiden Abstände um einen Wert zwischen 2 cm und 20 cm voneinander unterscheiden.

Mit anderen Worten kann durch die beschriebene Eckwende bewirkt werden, dass ein unterschiedlicher Radius für die Längsschenkel und die Querschenkel vorliegt. Dabei können grundsätzlich entweder die Längsschenkel oder die Querschenkel radial weiter außen liegend angeordnet sein. Der radiale Abstand zwischen den Längsschenkeln und den Querschenkeln kann dabei beispielsweise der radialen Dicke des Wicklungsträgers entsprechen, wobei der Unterschied in den Innenradien der Summe aus der radialen Dicke des Wicklungsträgers und der radialen Höhe der Wicklung entspricht. Die radiale Dicke des Wicklungsträgers kann dabei insbesondere etwa dem Doppelten des im Wendebereich vorliegenden Biegeradius des Bandleiters entsprechen, da der Bandleiter beispielsweise um etwa einen 180° Winkel um eine Oberfläche geführt werden kann, welche im Wesentlichen einem Ausschnitt einer Kreiszylinder-Fläche entsprechen kann.

In einer ersten möglichen Ausführungsform können die beiden Längsschenkel einen radialen Abstand r1 von der zentralen Achse aufweisen, welcher größer ist als der entsprechende radiale Abstand r2 der beiden Querschenkel. Ein allgemeiner Vorteil dieser Ausführungsform ist, dass eine radial möglichst weit außen liegende Anordnung der Längsschenkel zu einem höheren elektrischen Wirkungsgrad führt. Eine solche außen liegende Anordnung ist mit der beschriebenen Variante leichter zu erreichen. Insbesondere bei einem innenliegenden Rotor einer elektrischen Maschine ist dann die elektrische Wechselwirkung zwischen Rotor und Stator besonders hoch.

Bei einer zweiten möglichen Ausführungsform können die beiden Längsschenkel alternativ einen radialen Abstand r1 von der zentralen Achse aufweisen, welcher kleiner ist als der entsprechende radiale Abstand r2 der beiden Querschenkel. Ein Vorteil dieser alternativen Ausführungsform ist, dass es hierbei leichter ist, gebogene Querschenkel vorzusehen, welche beispielsweise den Außenkonturen einer kreiszylindrischen Anordnung folgen. Wenn die derart gebogenen Querschenkel im Verhältnis zu den Längsschenkeln radial weiter außen liegen, können sie durch einen anzuwendenden Wickelzug leichter von außen unter Erhalt dieser Krümmung auf einen hier von innen stützenden Wicklungsträger gepresst werden, welcher radial zwischen den Querschenkeln und den Längsschenkeln liegt. Ein weiterer Vorteil dieser Ausführungsform ist die größere Querschnittsfläche des freiliegenden Bereichs in der Nähe der Achse, der für die oben beschriebenen Zwecke wie beispielsweise Zuleitungen, Mechanik und/oder eine Rotorwelle genutzt werden kann.

Allgemein können die beiden Längsschenkel in ihren jeweiligen axialen Endbereichen so S-förmig gekrümmt sein, dass der radiale Abstand der Wicklung vom Zentrum der Spuleneinrichtung in diesen Endbereichen gegenüber den weiter innen liegenden Abschnitten der Längsschenkel verändert ist. Bei den genannten innen liegenden Abschnitten der Längsschenkel kann es sich insbesondere um den Hauptteil der axialen Länge handeln, welcher maßgeblich elektrisch wirksam ist. Die S-förmig gekrümmten axialen Endbereiche sind dann die Bereiche, welche an die Wickelköpfe angrenzen beziehungsweise schon in die Wickelköpfe übergehen. Besonders bevorzugt kann die S-Form so ausgebildet sein, dass der radiale Abstand vom Zentrum in den elektrisch wirksamen axial innenliegenden Abschnitten gegenüber den Endbereichen vergrößert ist. Durch diese Ausführungsform kann bei der Variante, bei der im Wendebereich die Längsschenkel weiter radial innen zu liegen kommen, trotzdem eine hohe elektrische Effizienz erreicht werden.

Im Unterschied zu den beiden vorab beschriebenen "Reinformen", bei denen die Querschenkel jeweils beide entweder weiter außen oder weiter innen liegen als die Längsschenkel, sind jedoch grundsätzlich auch Mischformen möglich. Bei einer solchen Mischform können also - von einem gegebenen Querschenkel aus betrachtet - sowohl eine Wende nach radial innen als auch eine Wende nach radial außen nebeneinander vorliegen.

Die axiale Länge der gesamten Spuleneinrichtung kann bevorzugt zwischen 0.5 m und 10 m, insbesondere zwischen 1 m und 7 m, liegen. Der Radius der gesamten Spuleneinrichtung kann (bei rotationssymmetrischer Ausgestaltung) bevorzugt zwischen 10 und 100 cm liegen.

Bei dem genannten Rotor kann es sich bevorzugt um einen Rotor für eine Synchronmaschine handeln. Insbesondere kann es sich um einen Rotor für eine Innenrotormaschine handeln, welcher mittels einer zentralen Rotorwelle drehbar gelagert sein kann.

Allgemein bevorzugt kann es sich bei dem Rotor um einen niederpoligen Rotor handeln, welcher insbesondere zur Ausbildung eines Magnetfeldes mit p=2 oder p=4 Polen ausgestaltet ist. Dabei ist die Zahl p=2 besonders bevorzugt. Bei einem derartig niederpoligen Rotor kommen die Vorteile der Erfindung besonders zum Tragen, da hier eine dreidimensionale Ausformung der Rotorwicklung besonders erwünscht ist. Mit einer solchen Ausformung können die Längsschenkel äquatornah angeordnet werden, während gleichzeitig die Querschenkel so geführt werden, dass der zentrale Bereich der Rotorachse von der Spulenwicklung freigehalten wird.

Alternativ zu der genannten Anwendung der Spuleneinrichtung in einem Rotor kann diese grundsätzlich jedoch auch beispielsweise in einem Stator einer elektrischen Maschine oder auch in einer Einrichtung zur Erzeugung eines Magnetfeldes zum Einsatz kommen.

Der Wicklungsträger ist so ausgestaltet, dass der darauf zu wickelnde Bandleiter mit einer seiner beiden Hauptflächen flächig darauf aufgewickelt werden kann. Besonders bevorzugt kann dies durchgehend über die ganze Windung des zuunterst aufliegenden Bandleiters erfolgen.

Der Wicklungsträger kann nach einer bevorzugten Ausführungsform aus wenigstens zwei Segmenten zusammengesetzt sein. Diese Unterteilung kann derart ausgestaltet sein, dass der Wicklungsträger von einer darauf aufgebrachten Spulenwicklung nachträglich entfernt werden kann, wobei die Spulenwicklung die durch die Auflagefläche vorgegebene Form beibehalten kann. Eine derartige Trennung des Wicklungsträgers in mehrere Segmente kann insbesondere dann erforderlich sein, wenn nach dem Herstellen der Wicklung der Bandleiter umlaufend den Wicklungsträger so umgibt, dass ein einstückiges Herausnehmen des Wicklungsträgers nicht mehr möglich ist, ohne die Wicklung in ihrer Form zu verändern. Durch Aufteilen des Wicklungsträgers in mehrere Segmente kann ein solches Herausnehmen aber ermöglicht werden, da die unterschiedlichen Segmente dann teils nach radial innen und teils nach radial außen hin von der Wicklung entfernt werden können.

Insbesondere kann ein solches nachträgliches Entfernen erfolgen, nachdem die Wicklung mit einem Imprägniermittel imprägniert und anschließend so ausgehärtet worden ist, dass eine freitragende Wicklung entsteht, welche dann auch ohne den Wicklungsträger in sich formstabil ist. Um die Trennung einer solchen freitragenden Wicklung von ihrem Wicklungsträger zu erleichtern, kann beispielsweise der Wicklungsträger vor dem Aufbringen der Wicklung mit einem Trennmittel beschichtet werden. Bei einem solchen Trennmittel kann es sich beispielsweise um eine Teflonschicht handeln.

Bei einer bevorzugten Ausführungsform des Herstellungsverfahrens kann während der Herstellung der Wicklung ein Wickelzug zum Einsatz kommen, welcher im Bereich zwischen 10 N und 200 N pro einzelnem Bandleiter liegt. Bei der gleichzeitigen Wicklung von einem Stapel aus mehreren Bandleitern erhöht sich der bevorzugt zu verwendende Wickelzug entsprechend. Mit einem Wickelzug im genannten Bereich kann gewährleistet werden, dass die beschriebene "Eckwende" des Bandleiters unter ausreichender Formstabilität erfolgt, wobei gleichzeitig eine Überlastung des Bandleiters durch übermäßig hohen Wickelzug vermieden wird. Mit anderen Worten soll der Wickelzug vorteilhaft so hoch gewählt werden, dass die beschriebene kleinräumige Wende durch ein Aufpressen auf den Wicklungsträger unterstützt wird und nach Erreichen dieser Form auch darauf festgehalten wird.

Nachfolgend wird die Erfindung anhand einiger bevorzugter Ausführungsbeispiele unter Bezugnahme auf die angehängten Zeichnungen beschrieben, in denen:
- Figur 1: eine schematische Darstellung eines Bandleiters einer supraleitenden Spuleneinrichtung in einem Wendebereich zeigt,
- Figur 2: eine schematische Aufsicht und einen schematischen Querschnitt eines Wicklungsträgers zeigt,
- Figur 3: die entsprechenden Ansichten des Wicklungsträgers der Figur 2 mit einer darauf angeordneten Wicklung zeigt,
- Figur 4: einen schematischen Querschnitt eines beispielhaften Rotors mit 4 unterschiedlichen Spulenwicklungen zeigt und
- Figur 5: einen schematischen Längsschnitt eines Ausschnitts einer beispielhaften Wicklung zeigt.

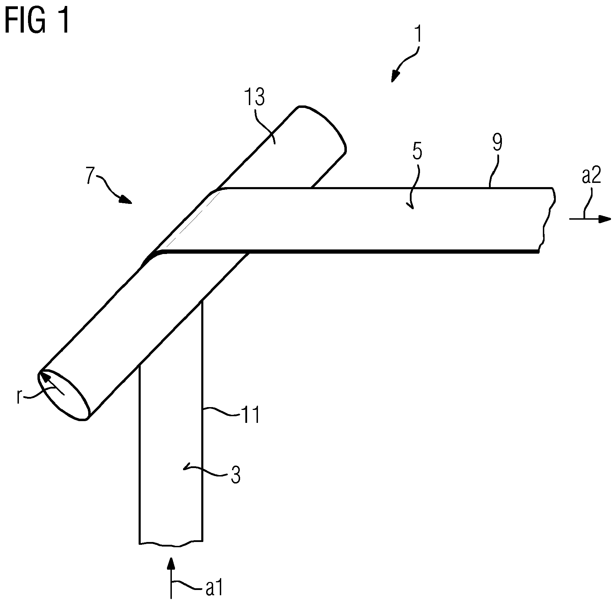

In Figur 1 ist eine schematische Darstellung eines Bandleiters 1 in einem Wendebereich 7 einer Spuleneinrichtung nach der vorliegenden Erfindung gezeigt. Ein solcher Wendebereich 7 kann prinzipiell in einem beliebigen Bereich einer Spulenwicklung auftreten, welche Teil einer solchen Spuleneinrichtung ist. Wesentlich im Zusammenhang mit der vorliegenden Erfindung ist, dass der Bandleiter 1 in einem solchen Wendebereich 7 einen deutlichen Richtungswechsel vollzieht und dabei gleichzeitig die Orientierung seiner beiden Hauptflächen wechselt. So erstreckt sich die Längsrichtung des Bandleiters 1 im linken Bereich der Figur 1 entlang einer Richtung a1, welche vertikal in der dargestellten Zeichnung liegt, während er im rechten Teil der Zeichnung nach Durchlaufen des Wendebereich 7 in einer Richtung a2 horizontal in der Zeichnung liegt. Es ergibt sich hier also ein Wechsel der Längsrichtung des Bandleiters 1 um etwa 90°. Links liegt der Bandleiter genau in der Zeichnungsfläche. Rechts liegt er in einer Fläche etwas "oberhalb" der Zeichnungsfläche und parallel dazu. Gleichzeitig wird hier die Orientierung des Bandleiters 1 gewendet, was dadurch zum Ausdruck kommt, dass im linken Teil der Zeichnung die erste Hauptfläche 3 zum Betrachter hin orientiert ist, während im rechten Teil der Zeichnung die zweite Hauptfläche 5 zum Betrachter hin orientiert ist. Bezüglich eines gedachten Zentrums der gesamten Spuleneinrichtung, welches beispielsweise auf einer Rotorachse liegen kann, wechselt so ebenfalls die Orientierung der Hauptflächen.

Der in Figur 1 ebenfalls dargestellte Stab 13 soll in Wirklichkeit nicht unbedingt Teil einer solchen Spulenwicklung sein. Er dient hier nur zur Illustration der Art der Biegung des Bandleiters. Wird nämlich der Bandleiter 1 wie dargestellt um einen solchen kreiszylindrischen Stab herumgebogen, so kann der gezeigte Richtungswechsel ohne eine unerwünschte Verbiegung innerhalb der Bandleiterebene erfolgen. Stattdessen wird die Biegung auf schonende Weise durch die sogenannte Eckwende - also eine gleichzeitige Wende der Flächen und Änderung der Richtung um etwa 90° erreicht. Die Achse dieses gedachten Stabes liegt in einer Fläche parallel zur Zeichnungsfläche zwischen den Ebenen der beiden gezeigten Leiterzweige 11 und 9 und hat einen Winkel von etwa 45° zu beiden Bandleiterrichtungen a1 und a2.

In einer realen Spulenwicklung würde der Bandleiter 1 in einem solchen Wendebereich 7 bevorzugt nicht an einem einzelnen Rundenstab aufliegen, sondern an einem größeren Wicklungsträger, der nur in diesem Bereich eine ähnliche Außenform aufweist. Dieser Wicklungsträger ist bevorzugt so ausgeformt, dass der Bandleiter sowohl in seinen vergleichsweise geraden Abschnitten, als auch im Wendebereich an seiner Auflagefläche aufliegt. Diese Auflagefläche kann bevorzugt innerhalb des Wendebereichs eine Kontur aufweisen, welche einem Ausschnitt einer kreiszylindrischen Oberfläche entspricht. Insofern steht die Außenfläche des in Figur 1 dargestellten Stabs stellvertretend für eine gekrümmte Oberfläche des Wicklungsträgers im Wendebereich 7 der Spulenwicklung. Analog zu dem gezeigten kreiszylindrischen Stab ist es besonders bevorzugt, wenn die gekrümmte Oberfläche des Wicklungsträgers im Wendebereich einen im Wesentlichen gleichbleibenden Biegeradius aufweist. Dieser Biegeradius kann beispielsweise im Bereich zwischen 1 cm und 10 cm liegen.

Die beiden Abschnitte des Bandleiters 1, welche durch den Wendebereich 7 miteinander verbunden sind, sind in Figur 1 als Längsschenkel 9 und als Querschenkel 11 einer Wicklung gekennzeichnet. Diese beiden Abschnitte müssen jedoch jeweils nicht vollkommen gerade sein, sondern sie können ebenfalls zumindest zum Teil gebogen sein. Wesentlich ist jedoch, dass sie, wenn sie gebogen sind, im Vergleich zum Wendebereich 7 geringere Biegeradien aufweisen.

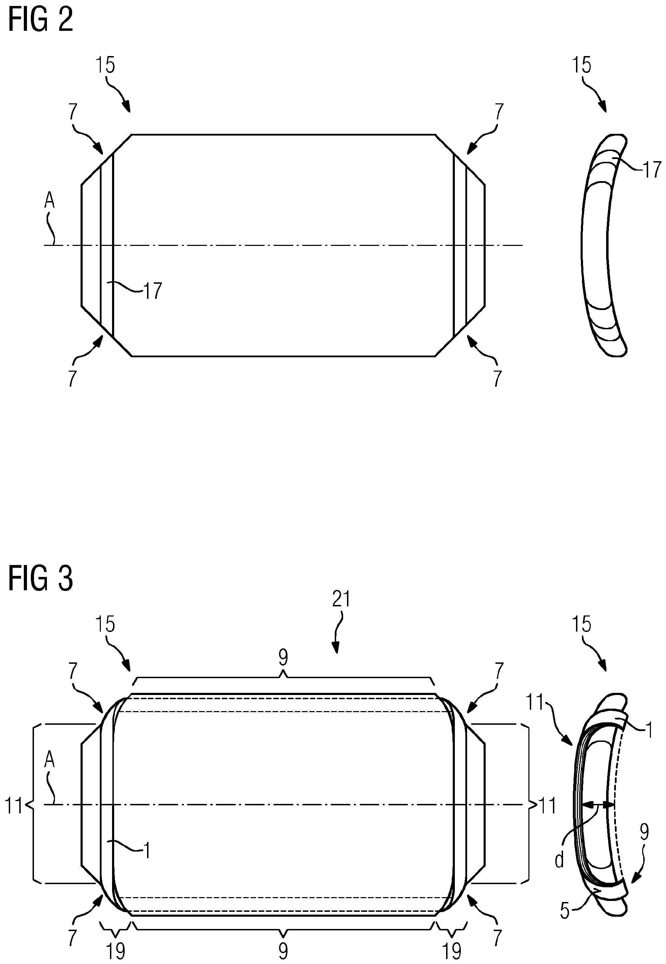

Figur 2 zeigt im linken Teil eine schematische Aufsicht und im rechten Teil einen schematischen Querschnitt eines Wicklungsträgers 15 nach einem Ausführungsbeispiel der Erfindung. Wie im rechten Teil der Figur 2 ersichtlich, ist der Wicklungsträger 15 so ausgestaltet, dass seine Grundform einen Teil einer Zylinderoberfläche nachbildet. Ein derart geformter Wicklungsträger kann beispielsweise zusammen mit einer auf ihm aufgebrachten Wicklung auf einer zylindrischen Fläche eines kreiszylindrischen Rotors einer elektrischen Maschine angebracht werden. Hierzu können beispielsweise zwei solche Zylindersegmente jeweils in einem entsprechenden radialen Abstand symmetrisch um eine zentrale Rotationsachse A des Rotors angebracht werden. Im linken Teil der Figur 2 ist eine solche Achse A schematisch mittig und in der Papierebene hinter dem gezeigten Wicklungsträger 15 dargestellt.

Der gezeigte Wicklungsträger 15 weist eine umlaufende Auflagefläche 17 auf, auf die eine oder mehrere Windungen eines supraleitenden Bandleiters flächig aufgewickelt werden können. Im linken Teil der Figur 2 sind auf dem Wicklungsträger die beiden zu den Querschenkeln der Wicklung gehörenden Teile der Auflagefläche 17 zu erkennen. Der Wicklungsträger 15 weist vier Wendebereiche 7 auf, in denen der darauf aufzuwickelnde Bandleiter - wie im Zusammenhang mit der Figur 1 näher beschrieben - gewendet wird und schließlich in die Längsschenkel der Wicklung übergeht. Die zugehörigen Auflageflächen dieser Längsschenkel sind in der Figur 2 nicht näher dargestellt, da sie in Blickrichtung hinter dem Wicklungsträger verlaufen. Wie in Figur 2 zu erkennen, weist der Wicklungsträger in den vier Wendebereichen 7 abgerundete Ecken auf, über die ein darauf aufliegender Bandleiter mit einem vorgegebenen Biegeradius geführt wird.

Die beschriebenen geometrischen Verhältnisse werden im Zusammenhang mit Figur 3 noch weiter verdeutlicht. Figur 3 zeigt die entsprechenden beiden Ansichten des Wicklungsträgers der Figur 2 mit dem Unterschied, dass hier auf dem Wicklungsträger zusätzlich eine umlaufende Spulenwicklung 21 angeordnet ist. Diese Spulenwicklung 21 umfasst mehrere übereinander gewickelte Windungen eines Bandleiters 1, wobei die unterste dieser Windungen flächig auf der umlaufenden Auflagefläche 17 des Wicklungsträgers aufliegt. Die beiden hinter dem Wicklungsträger 15 verlaufenden Längsschenkel 9 der Wicklung 21 sind dabei durch gestrichelte Linien angedeutet. Diese beiden Längsschenkel 9 erstrecken sich parallel zur Richtung der zentralen Achse A der gesamten Spuleneinrichtung. Eine solche gesamte Spuleneinrichtung kann beispielsweise mehrere derartige Spulenwicklungen 21 aufweisen, welche symmetrisch um diese Achse A angeordnet sind. Wie im rechten Teil der Figur 3 ersichtlich, weisen die beiden Querschenkel 11 der Wicklung eine Krümmung auf, welche der gekrümmten Kontur des Wicklungsträgers folgt. Bezogen auf diese Krümmung des Wicklungsträgers und die zentrale Achse A liegen dabei die Querschenkel 11 radial außen und die Längsschenkel 9 radial innen. Der Unterschied zwischen den entsprechenden Radien der einzelnen Schenkel ist dabei durch den Abstand d gegeben, welche die Summe aus der Dicke des Wicklungsträgers und der Höhe der Wicklung darstellt. Insgesamt liegt der Wicklungsträger 15 radial zwischen diesen einzelnen Schenkeln. In den vier Wendebereichen 7 ist der Bandleiter 1 mit einem vergleichsweise geringen Biegeradius unter einem vorgegebenen Wickelzug um die abgerundeten Ecken des Wicklungsträgers gebogen.

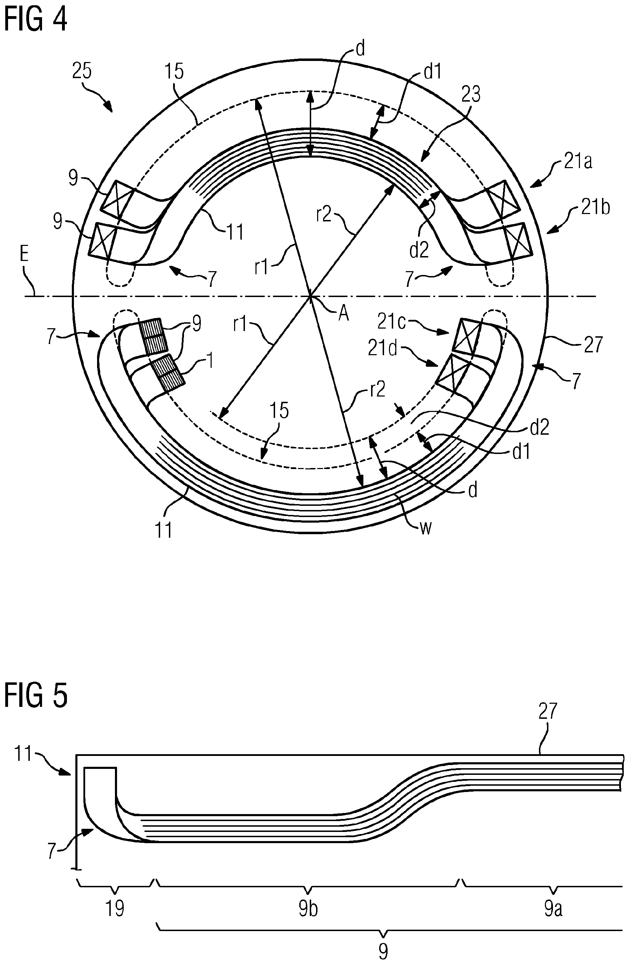

Figur 4 zeigt einen schematischen Querschnitt eines Rotors 25 nach einem weiteren Ausführungsbeispiel der Erfindung. Gezeigt ist ein Schnitt senkrecht zur zentralen Rotorachse A. Der Rotor ist mittels einer hier nicht dargestellten Rotorwelle drehbar um diese zentrale Achse A gelagert und weist ein etwa kreiszylindrisches Gehäuse 27 auf. Dieser Rotor 25 weist eine Spuleneinrichtung 23 auf, welche beispielsweise als Erregerwicklung einer elektrischen Maschine ausgestaltet sein kann. Als Teile dieser Spuleneinrichtung sind hier beispielhaft vier einzelne Spulenwicklungen 21a bis 21d gezeigt. Oberhalb der Äquatorebene E sind hierbei zwei Spulenwicklungen 21a und 21b eines ersten Typs gezeigt, bei dem die beiden Längsschenkel 9 jeweils einen größeren Radius r1 aufweisen als die beiden Querschenkel 11 mit Radius r2. Demgegenüber sind unterhalb der Äquatorebene E zwei Spulenwicklungen 21c und 21d eines unterschiedlichen zweiten Typs gezeigt, bei dem die beiden Längsschenkel 9 jeweils einen kleineren Radius r1 aufweisen als die beiden Querschenkel 11 mit Radius r2. Jede der gezeigten Spulenwicklungen weist dabei mehrere Windungen w eines supraleitenden Bandleiters 1 auf. Bei einer realen Spuleneinrichtung ist es im Unterschied zum Beispiel der Figur 4 grundsätzlich vorteilhaft, wenn mehrere Spulenwicklungen desselben Typs verwendet werden. Die unterschiedlichen Ausgestaltungen dienen hier nur der Illustration.

Im oberen Teil der Figur 4 sind beide dargestellten Spulenwicklungen 21a und 21b auf demselben Wicklungsträger 15 angeordnet, der hier gestrichelt dargestellt ist. Jede der Spulenwicklungen hat zwei Längsschenkel 9, welche jeweils einen radialen Abstand r1 von der zentralen Achse A aufweisen. Diese Längsschenkel 9 schmiegen sich radial außen liegend an den Wicklungsträger an. Die zwei Längsschenkel einer Wicklung sind wiederum ähnlich wie in Figur 3 über vier Wendebereiche 7 mit zwei axial endständige Querschenkeln 11 verbunden, von denen in Figur 4 nur der vorne liegende sichtbar ist. Der Unterschied zwischen den beiden Radien r1 und r2 ist durch den Abstand d gegeben, welcher sich wiederum als Summe der radialen Dicke d1 des Wicklungsträgers und der radialen Höhe d2 der Wicklung ergibt. Vorteilhaft ist hier, dass die elektrisch wirksamen Längsschenkel 9 auf einem großen radialen Abstand r1 zum Zentrum des Rotors angeordnet sind.

Im unteren Teil der Figur 4 stellen sich die Verhältnisse der Radien der Schenkel genau umgekehrt dar: die Längsschenkel 9 schmiegen sich radial innen liegend an den Wicklungsträger an, und die mit ihnen über die Wendebereiche 7 verbundenen Querschenkel 11 schmiegen sich radial außen liegend an den Wicklungsträger an, so dass hier r2 größer ist als r1. Der Unterschied zwischen den beiden Radien r1 und r2 ist auch hier durch den Abstand d gegeben, welcher sich als Summe der radialen Dicke d1 des Wicklungsträgers und der radialen Höhe d2 der Wicklung ergibt. Vorteilhaft ist bei diesem zweiten Ausführungstyp, dass die gebogenen Querschenkel 9 mithilfe des beim Wickeln verwendeten Wickelzugs fest auf der Außenseite des gebogenen Wicklungsträgers 15 gehalten werden.

Wie im linken unteren Teil der Figur 4 schematisch dargestellt, können die jeweiligen Wicklungen jeweils nicht nur mehrere übereinander liegende Windungen w, sondern auch jeweils mehrere in Umfangsrichtung nebeneinanderliegende Bahnen von Bandleitern 1 aufweisen (hier zwei nebeneinander). Auch dies ist ein möglicher Weg, um einen höheren Strom in der gesamten Wicklung zu erreichen. Um eine solche Ausgestaltung zu ermöglichen, sollte dann die zugehörige Auflagefläche des Wicklungsträgers entsprechend verbreitert sein. Die Breite eines einzelnen Bandleiters kann allgemein bevorzugt zwischen 2 mm und 40 mm, insbesondere zwischen 4 mm und 12 mm, liegen. Neben einzelnen Bandleitern (sowie Stapeln aus Bandleitern oder nebeneinanderliegenden Bandleitern) können hier grundsätzlich auch Röbelleiter (also Verbundleiter aus mehreren transponiert angeordneten Bandleitern) beim Wickeln zum Einsatz kommen.

Figur 5 zeigt einen schematischen Längsschnitt eines Ausschnitts einer Spuleneinrichtung nach einem weiteren Ausführungsbeispiel der Erfindung. Gezeigt ist hier ein radial außenliegender Bereich einer Spulenwicklung in einer solchen Spuleneinrichtung im Bereich des Rotorgehäuses 27. Gezeigt ist ein Wendebereich 7, welcher einen Längsschenkel 9 und einen Querschenkel 11 der Wicklung miteinander verbindet. Der Längsschenkel 9 weist hier einen axial innen liegenden Bereich 9a auf (von dem nur ein kleiner Teil gezeigt ist) und einen axial endständig daran angrenzenden Bereich 9b, in dem der Längsschenkel S-förmig gebogen ist. Die Biegung ist hier so ausgebildet, dass der radiale Abstand von der hier nicht dargestellten Achse vom mittleren Bereich 9a zum endständigen Bereich 9b hin verkleinert wird. Demgegenüber ist der Wendebereich 7 so ausgestaltet, dass sich der radiale Abstand zum Querschenkel 11 hin wieder vergrößert. Auf diese Weise wird vorteilhaft erreicht, dass trotz der - vom Querschenkel aus gesehen - nach innen gerichteten Wende ein Großteil der Längsschenkel 9 auf einem relativ großen Radius des Rotors angeordnet werden kann.

## Patentansprüche

1. Dreidimensional ausgeformte supraleitende Spuleneinrichtung (23) mit wenigstens einer Spulenwicklung (21,21a-21d), umfassend wenigstens eine Windung (w) aus einem supraleitenden Bandleiter (1),
- wobei der Bandleiter (1) eine erste (3) und eine zweite (5) Hauptfläche aufweist,
- wobei die Spulenwicklung (21,21a-21d) wenigstens einen Wendebereich (7) aufweist, in dem der Bandleiter (1) so gebogen ist, dass er in diesem Wendebereich (7) einen Richtungswechsel seiner Längsrichtung (a1, a2) aufweist und gleichzeitig die Orientierung seiner beiden Hauptflächen (3,5) bezüglich einer zentralen Achse (A) der Spuleneinrichtung (23) wechselt,
- **dadurch gekennzeichnet, dass** die wenigstens eine Spulenwicklung (21,21a-21d) zwei Längsschenkel (9) aufweist, die sich entlang der zentralen Achse (A) der Spuleneinrichtung (23) erstrecken, zwei axial endständige Querschenkel (11) aufweist, die die beiden Längsschenkel (9) in ihren beiden axialen Endbereichen miteinander verbinden,
und in den Übergangsbereichen zwischen den Längsschenkeln (9) und den Querschenkeln (11) insgesamt vier Wendebereiche (7) aufweist, sodass die zwei Längsschenkel (9) einer Wicklung jeweils über einen der Wendebereiche (7) mit zwei axial endständigen Querschenkeln (11) verbunden sind.

2. Spuleneinrichtung (23) nach Anspruch 1, bei welcher der minimale Biegeradius r des Bandleiters (1) innerhalb des Wendebereichs (7) zwischen 1 cm und 25 cm liegt.

3. Spuleneinrichtung (23) nach einem der vorhergehenden Ansprüche, bei welcher der Bandleiter (1) ein Substratband und eine darauf angeordnete hochtemperatursupraleitende Schicht aufweist.

4. Spuleneinrichtung (23) nach einem der vorhergehenden Ansprüche, bei welcher der Wendebereich (7) ein räumlich stark begrenzter Teilbereich des gesamten Umfangs der Spulenwicklung (21,21a-21d) ist.

5. Spuleneinrichtung (23) nach einem der vorhergehenden Ansprüche,
- bei welcher die beiden Längsschenkel (9) einen untereinander gleichen radialen Abstand r1 von der zentralen Achse (A) aufweisen
- und bei welcher die beiden Querschenkel (11) einen untereinander gleichen radialen Abstand r2 von der zentralen Achse (A) aufweisen,
- wobei sich diese beiden radialen Abstände (r1, r2) um einen Wert d zwischen 2 cm und 20 cm voneinander unterscheiden.

6. Spuleneinrichtung (23) nach Anspruch 5, bei welcher die beiden Längsschenkel (9) einen radialen Abstand r1 von der zentralen Achse (A) aufweisen, welcher größer ist als der entsprechende radiale Abstand r2 der beiden Querschenkel (11) .

7. Spuleneinrichtung (23) nach Anspruch 5, bei welcher die beiden Längsschenkel (9) einen radialen Abstand r1 von der zentralen Achse (A) aufweisen, welcher kleiner ist als der entsprechende radiale Abstand r2 der beiden Querschenkel (11) .

8. Spuleneinrichtung (23) nach einem der vorhergehenden Ansprüche,
- bei welcher die beiden Längsschenkel (9) in ihren axialen Endbereichen (9b) jeweils so S-förmig gekrümmt sind, dass der radiale Abstand der Wicklung von der zentralen Achse (A) in diesen Endbereichen (9b) gegenüber den weiter innenliegenden Abschnitten (9a) verändert ist.

9. Rotor (25) für eine elektrische Maschine, welcher wenigstens eine Spuleneinrichtung (23) nach einem der vorhergehenden Ansprüche aufweist.

10. Rotor (25) nach Anspruch 9, welcher zur Ausbildung eines Magnetfeldes mit p Polen ausgebildet ist, wobei p gleich 2 oder 4 ist.

11. Wicklungsträger (15) ausgebildet für eine dreidimensional ausgeformte supraleitende Spuleneinrichtung (23) mit wenigstens einer Spulenwicklung (21,21a-21d) nach einem der Ansprüche 1 - 8,
- welcher eine ringförmig umlaufende Auflagefläche (17) zur flächigen Auflage des supraleitenden Bandleiters (1) aufweist,
- wobei die Auflagefläche (17) Wendebereiche (7) aufweist, in dem die Auflagefläche (17) so gebogen ist, dass sie in diesem Wendebereich (7) einen Richtungswechsel in der Längsrichtung (a1, a2) des auflegbaren Bandleiters (1) bewirkt und gleichzeitig die Orientierung der beiden Hauptflächen (3,5) des auflegbaren Bandleiters (1) bezüglich der zentralen Achse (A) der Spuleneinrichtung (23) wechselt,
- und in den Übergangsbereichen zwischen den Längsschenkeln (9) und den Querschenkeln (11) des aufzuwickelnden Bandleiters (1) insgesamt vier Wendebereiche (7) aufweist.

12. Wicklungsträger (15) nach Anspruch 11, welcher derart aus wenigstens zwei Segmenten zusammengesetzt ist, dass er aus einer darauf aufgebrachten Spulenwicklung nachträglich herausgenommen werden kann, wobei die Spuleneinrichtung (23) die durch die Auflagefläche (17) vorgegebene Form behält.

13. Verfahren zur Herstellung einer dreidimensional ausgeformten supraleitenden Spuleneinrichtung (23) nach einem der Ansprüche 1 - 8 mit einem Wicklungsträger (15) nach einem der Ansprüche 11 oder 12, bei dem wenigstens eine Windung (w) aus dem supraleitenden Bandleiter (1) so auf den einen Wicklungsträger (15) aufgewickelt wird, dass eine erste Hauptfläche (3) des Bandleiters umlaufend flächig auf der Auflagefläche (17) des Wicklungsträgers (15) zu liegen kommt und die wenigstens eine Spuleneinrichtung so gehalten ist, dass sie in den Wendebereichen (7) auf dem Wicklungsträger (15) aufliegt.

## Claims

1. Three-dimensionally shaped superconducting coil device (23) having at least one coil winding (21, 21a-21d), comprising at least one turn (w) of a superconducting strip conductor (1),
- wherein the strip conductor (1) has a first (3) and a second (5) main face,
- wherein the coil winding (21, 21a-21d) has at least one turning region (7), in which the strip conductor (1) is bent such that, in this turning region (7), it has a change of direction in its longitudinal direction (a1, a2) and simultaneously changes the orientation of its two main faces (3, 5) with respect to a central axis (A) of the coil device (23),
- **characterized in that** the at least one coil winding (21, 21a-21d) has two longitudinal limbs (9), which extend along the central axis (A) of the coil device (23), has two axially terminal transverse limbs (11), which connect the two longitudinal limbs (9) to each other in their two axial end regions, and, in the transition regions between the longitudinal limbs (9) and the transverse limbs (11), has a total of four turning regions (7), so that the two longitudinal limbs (9) of one winding are connected to two axially terminal transverse limbs (11) by means of one of the turning regions (7) in each case.

2. Coil device (23) according to Claim 1, in which the minimum bend radius r of the strip conductor (1) within the turning region (7) is between 1 cm and 25 cm.

3. Coil device (23) according to either of the preceding claims, in which the strip conductor (1) has a substrate strip and a high-temperature superconducting layer arranged thereon.

4. Coil device (23) according to any one of the preceding claims, in which the turning region (7) is a spatially highly limited sub-region of the total circumference of the coil winding (21, 21a-21d).

5. Coil device (23) according to any one of the preceding claims,
- in which the two longitudinal limbs (9) have a mutually equal radial distance r1 from the central axis (A)
- and in which the two transverse limbs (11) have a mutually equal radial distance r2 from the central axis (A),
- wherein these two radial distances (r1, r2) differ from each other by a value d of between 2 cm and 20 cm.

6. Coil device (23) according to Claim 5, in which the two longitudinal limbs (9) have a radial distance r1 from the central axis (A) that is greater than the corresponding radial distance r2 of the two transverse limbs (11).

7. Coil device (23) according to Claim 5, in which the two longitudinal limbs (9) have a radial distance r1 from the central axis (A) that is less than the corresponding radial distance r2 of the two transverse limbs (11).

8. Coil device (23) according to any one of the preceding claims,
- in which the two longitudinal limbs (9) are each curved in an S shape in their axial end regions (9b), such that the radial distance of the winding from the central axis (A) in these end regions (9b) is altered with respect to the more inner portions (9a).

9. Rotor (25) for an electrical machine, having at least one coil device (23) according to any one of the preceding claims.

10. Rotor (25) according to Claim 9, which is designed to realize a magnetic field having p poles, wherein p is equal to 2 or 4.

11. Winding carrier (15) designed for a three-dimensionally shaped superconducting coil device (23) having at least one coil winding (21, 21a-21d) according to any one of Claims 1-8,
- which has a ring-shaped circumferential bearing contact surface (17) for flat bearing contact of the superconducting strip conductor (1),
- wherein the bearing contact surface (17) has turning regions (7), in which the bearing contact surface (17) is bent such that, in this turning region (7), it causes a change of direction in the longitudinal direction (a1, a2) of the strip conductor (1) that can be in bearing contact and, at the same time, the orientation of the two main faces (3, 5) of the strip conductor (1) that can be in bearing contact changes with respect to the central axis (A) of the coil device (23),
- and, in the transition regions between the longitudinal limbs (9) and the transverse limbs (11) of the strip conductor (1) to be wound on, has a total of four turning regions (7).

12. Winding carrier (15) according to Claim 11, which is composed of at least two segments, in such a manner that it can subsequently be removed from a coil winding applied to it, wherein the coil device (23) retains the shape defined by the bearing contact surface (17).

13. Method for producing a three-dimensionally shaped superconducting coil device (23) according to any one of Claims 1-8 having a winding carrier (15) according to either of Claims 11 and 12, in which at least one turn (w) of the superconducting strip conductor (1) is wound onto the winding carrier (15) such that a first main face (3) of the strip conductor comes to lie flatly circumferentially on the bearing contact surface (17) of the winding carrier (15) and the at least one coil device is held such that it rests on the winding carrier (15) in the turning regions (7).

## Revendications

1. Dispositif bobine (23) supraconducteur tridimensionnel avec au moins un enroulement de bobine (21, 21a-21d), comprenant au moins un enroulement (w) dans un conducteur en bande (1) supraconducteur,
- dans lequel le conducteur en bande (1) présente une première (3) et une deuxième (5) face principale,
- dans lequel l'enroulement de bobine (21, 21a-21d) présente au moins une zone de tournant (7) dans laquelle le conducteur en bande (1) est ainsi courbé qu'il présente dans cette zone de tournant (7) un changement de sens de son sens longitudinal (a1, a2) et simultanément change l'orientation de ses deux faces principales (3, 5) par rapport à un axe central (A) du dispositif bobine (23),
**caractérisé en ce que** l'au moins un enroulement de bobine (21, 21a-21d) présente deux branches longitudinales (9) qui s'étendent le long de l'axe central (A) du dispositif bobine (23), présente deux branches transversales (11) axiales en extrémité qui relient entre elles les deux branches longitudinales (9) dans leurs deux parties d'extrémité axiales, et présente dans les jonctions entre les branches longitudinales (9) et les branches transversales (11) quatre zones de tournant (7) en tout, de sorte que les deux branches longitudinales (9) d'un enroulement sont reliées à deux branches transversales (11) axiales en extrémité par respectivement une des zones de tournant (7) .

2. Dispositif bobine (23) selon la revendication 1, dans lequel le rayon de courbure minimal r du conducteur en bande (1) à l'intérieur de la zone de tournant fait entre 1 cm et 25 cm.

3. Dispositif bobine (23) selon l'une des revendications précédentes, dans lequel le conducteur en bande (1) présente une bande de substrat et une couche supraconductrice à haute température disposée dessus.

4. Dispositif bobine (23) selon l'une des revendications précédentes, dans lequel la zone de tournant (7) est une région partielle fortement délimitée physiquement de la totalité du pourtour de l'enroulement de bobine (21, 21a-21d).

5. Dispositif bobine (23) selon l'une des revendications précédentes,
- dans lequel les deux branches longitudinales (9) présentent un écart radial r1 égal par rapport à l'axe central (A),
- et dans lequel les deux branches transversales (11) présentent un écart radial r2 égal par rapport à l'axe central (A) ,
- dans lequel ces deux écarts radiaux (r1, r2) se différencient entre eux d'une valeur d entre 2 cm et 20 cm.

6. Dispositif bobine (23) selon la revendication 5, dans lequel les deux branches longitudinales (9) présentent un écart radial r1 par rapport à l'axe central (A) qui est plus grand que l'écart radial r2 correspondant des deux branches transversales (11) .

7. Dispositif bobine (23) selon la revendication 5, dans lequel les deux branches longitudinales (9) présentent un écart radial r1 par rapport à l'axe central (A) qui est plus petit que l'écart radial r2 correspondant des deux branches transversales (11) .

8. Dispositif bobine (23) selon l'une des revendications précédentes,
- dans lequel les deux branches longitudinales (9) sont ainsi courbées en formant un S dans leurs zones d'extrémité axiales (9b) que l'écart radial de l'enroulement par rapport à l'axe central (A) dans ces zones d'extrémité (9b) est modifié par rapport aux tronçons (9a) plus loin à l'intérieur.

9. Rotor (25) pour une machine électrique, lequel présente au moins un dispositif bobine (23) selon l'une des revendications précédentes.

10. Rotor (25) selon la revendication 9, lequel est conçu pour former un champ magnétique de p pôles, dans lequel p égale 2 ou 4.

11. Support d'enroulement (15) conçu pour un dispositif bobine (23) supraconducteur tridimensionnel comprenant au moins un enroulement de bobine (21, 21a-21d) selon l'une des revendications 1 - 8,
- lequel présente une surface d'appui (17) périphérique annulaire pour l'appui à plat du conducteur en bande (1) supraconducteur,
- dans lequel la surface d'appui (17) présente des zones de tournant (7) dans laquelle la surface d'appui (17) est ainsi courbée qu'elle effectue dans cette zone de tournant (7) un changement de direction dans le sens longitudinal (a1, a2) du conducteur en bande (1) pouvant être posé et simultanément change l'orientation des deux faces principales (3, 5) du conducteur en bande (1) pouvant être posé, par rapport à l'axe central (A) du dispositif bobine (23),
et présente dans les jonctions entre les branches longitudinales (9) et les branches transversales (11) du conducteur en bande (1) à enrouler, quatre zones de tournant (7) en tout.

12. Support d'enroulement (15) selon la revendication 11, lequel est composé d'au moins deux segments de telle façon qu'il peut être sorti ultérieurement d'un enroulement de bobine placé dessus, dans lequel le dispositif bobine (23) conserve la forme donnée par la surface d'appui (17).

13. Procédé de fabrication d'un dispositif bobine (23) supraconducteur tridimensionnel selon l'une des revendications 1 - 8 comprenant un support d'enroulement (15) selon l'une des revendications 11 ou 12, dans lequel au moins un enroulement (w) est enroulé à partir du conducteur en bande (1) supraconducteur sur le support d'enroulement (15) de telle façon qu'une première face principale (3) du conducteur en bande vient reposer de manière périphérique et à plat sur la surface d'appui (17) du support d'enroulement (15) et l'au moins un enroulement de bobine est ainsi maintenu qu'il repose sur le support d'enroulement (15) dans les zones de tournant (7).
